# EUROPEAN PATENT SPECIFICATION

(11) **EP 2 293 755 B1**
(45) Date of publication and mention of the grant of the patent: **16.11.2011**
(21) Application number: 09775807.2
(22) Date of filing: 22.05.2009
(51) Int. Cl.: A61G 3/06, B60P 1/43, B60R 3/02

(54) **FOLDABLE RAMP ALLOWING AN INVALID WHEELCHAIR PASSENGER ENTER INTO A VEHICLE**
FALTBARE RAMPE FÜR DEN EINSTIEG EINES INVALIDEN ROLLSTUHLFAHRERS IN EIN FAHRZEUG
RAMPE PLIABLE PERMETTANT À UN PASSAGER INVALIDE EN CHAISE ROULANTE D'ENTRER DANS UN VÉHICULE

(30) Priority: 08.07.2008 CZ 200820117 U
(43) Date of publication of application: 16.03.2011
(73) Proprietor: API CZ S.R.O., 391 76 Slapy (CZ)
(72) Inventor: BARTOS, Miroslav, 390 01 Tabor (US)
(74) Representative: Sedlák, Jirí
(86) International application number: PCT/CZ2009/000073
(87) International publication number: WO 2010/003387

(56) References cited:
- WO-A-00/09060

## Description

### Background and summary of the invention

The invention relates to foldable ramps allowing the entry of invalid wheelchairs, also electric scooters etc. in a vehicle. This ramp is appropriate especially for cars of combined operation, i.e. for transport of healthy individuals, persons with a health or physical handicap bound to an invalid wheelchair as well as for transport of luggage and other loads. In practice the invention is especially applicable for taxi service vehicles, hotel services, travel agencies etc.

There are many devices facilitating the movement in and out of the vehicle, as well as the transport of persons bound to a wheelchair, and also for electric scooters and similar loads.

In patent documents CZ 292 and EP 1 743 611 there are described ramps to be pulled out accommodated in the basic frame (chassis) under the floor of the vehicle, from where they are pulled out, folded out respectively to the entry platform. However, this solution is rarely used since most vehicles lack sufficient height that would allow for accommodation of the frame with the ramp. Therefore this solution is appropriate rather for buses and trolley-buses.

Patent document FR 2 597 801 discloses a vehicle with a lowered rear portion where the ramp is folded out into the entry position by means of a hydraulic mechanism and at the same time the whole rear portion of the vehicle is being lowered. This solution is very complicated and it represents a significant interference in the chassis set up of the vehicle.

Patent documents GB 2 275 030, WO 97/02171, EP 0 390 431, WO 0 305 96 85 and US 5 137 413 disclose foldable ramps, pivotally attached in the rear portion of the lowered floor of the vehicle. The lowered floor is adapted to receive the wheelchair and it is therefore necessary to solve the new placement of the fuel tank, the exhaust and the reserve wheel. The entry platform of the ramp is in one (entry) position folded out of the vehicle (from the rear door) towards the ground; in the second (transport) position it is vertically lifted between the wheelchair and the rear door. The important disadvantage of this solution consists in the fact that after the wheelchair moves out of the vehicle, the ramp lingers in the vertical position and in every other operation of the vehicle, e.g. loading luggage, the ramp must be first folded out and then folded in the vehicle. Vehicles with this adjustment are appropriate for one purpose operation, not for a universal one.

Patent application US 2004/0172 775 discloses a foldable ramp for the side doorway entry. In the transport position the ramp is folded horizontally in the vehicle within a frame integrated in the floor. The ramp is formed by two sections, both sections unfolding from the base frame by means of a lever mechanism, the propulsion of which is not shown. The advantage of this ramp consists in the fact that it does not interfere with important parts of the vehicle, however it consists of a great number of movement mechanisms and therefore the construction of the ramp, due to the number of parts, is complicated and defects occur.

Patent documents EP 1 535 592, GB 2 301 082 and EP 0 976 376 disclose manually foldable ramps or stairs. The ramp is formed by a floor well on the front edge of which, also forming the edge of the rear part of the vehicle, the entry platform/stair is pivotally attached by means of a hinge. The entry platform operates in two positions, after the wheelchair has entered the car it can be folded in the floor well. The platform does not have a vertical transport position, i.e. it cannot be used at the same time for the entry and for the standing position of the wheelchair and the wheelchair after having entered the vehicle must continue further into the vehicle. This solution is also more appropriate for buses or trolley buses.

Finally there is a solution which discloses a manually foldable ramp connected to a lowered floor (floor well) in the rear part of the vehicle according to the published patent application WO 0009060. There is a lowered floor well prepared in the rear part of the vehicle. The passenger in a wheelchair moves into it progressing on the one part or two part platform attached on the edge of the vehicle by means of a pivotal hinge. If the platform is made of one part, it is lifted in a vertical transport position between the wheelchair and the door and is locked by a safety latch. After the wheelchair moves out of the vehicle, the platform is folded into the vehicle (the pivotal hinge is moved into another height configuration) and covers the floor well. In this position there is a luggage room created in the rear part of the vehicle corresponding to common vehicles, with no limitation of access. If the platform is made of two parts there is no need to change the height configuration of the pivotal hinge. In the position of the entry of the wheelchair and in the transport position both parts are in an interlocking position. After the wheelchair moves out of the vehicle the locking is released and the second part of the platform is folded on the floor well, while the first part creates the rear face. The construction and production of this solution is very simple, however the manipulation with the ramp is impractical, since the manipulation with the platform is complicated for one person. The platform is not balanced, its centre of gravity is far from the edge of the vehicle and it is necessary to operate with both parts of the platform.

The above mentioned disadvantages are removed by a foldable ramp for wheelchairs according to this present solution. The principal part represents a ramp unfolding out of the vehicle when in the entry position, in the transport position the ramp is arrested vertically inside the vehicle at the edge of the lowered floor well in which the wheelchair with the passenger is transported and in the passive position it is positioned vertically above the floor well.

The merits of the solution consist in that the ramp is provided by carriers on its sides, the carriers being movably connected to tiltable side parts being pivotally attached to the lower edge of the floor well and the movable connection of the carriers to the tiltable side parts is created with the possibility of change of position of the ramp in respect of the tiltable side parts when changing from the transport position of the ramp into the passive position of the ramp applying a rotationally translational movement such that in the passive position the tiltable side parts are extended vertically and the ramp lies horizontally on the level of the upper edges of the floor well as well as on the level of the tiltable side parts.

The main advantage of this arrangement consists in the fact that the centre of gravity of the ramp is lowered and it shifts in the course of the pivotal movement such that the ramp is balanced and easy to manipulate. The movable connection of the carriers to the tiltable side parts is advantageously resolved such that each carrier is provided with at least one guide pin fitting into a shaped guiding groove formed in the tiltable side parts corresponding to the respective carrier. The shape of the guiding groove thus determines the trajectory of the rotationally translational movement.

In another advantageous embodiment the shaped guiding groove is terminated on its lower end by a recess the direction of which goes vertically downwards when the tiltable side part is in vertical position. This recess is an advantageous solution of the arrestment of the ramp in vertical transport position. When the ramp is set in this position, it will go down, the guide pins will fit in the recess and the ramp will be arrested.

It is advantageous that each tiltable side part be provided with at least one guide pin fitting into a shaped guiding groove formed in the carrier corresponding to the tiltable side part and the shaped guiding groove extends parallel to the recess of the shaped guiding groove of the tiltable side part when the ramp is in the transport position. The shaped guiding groove in the carrier in combination with the shaped guiding groove in the tiltable side part forms a two point guiding of the rotationally translational movement and at the same time it forms the necessary backstop for arrestment in the vertical position.

In another advantageous embodiment a spring is attached by one of its ends to at least one tiltable side part and the other end of the spring is attached to the ramp or to the carrier. The action of the spring has a double effect. It assists in arresting the ramp in the vertical position and it balances the ramp when the letter is folded inside the vehicle and helps the lifting thereof.

It is further advantageous that a foldable support be pivotally attached at the edge of the ramp. The support automatically unfolds when the ramp is being put in the passive position inside the vehicle and it abuts against the bottom of the lowered floor well.

In another advantageous embodiment the ramp consists of at least two pivotally interconnected parts, which allows for the prolongation of the ramp.

It is also advantageous that the ramp be provided with a fixture formed by an aperture.

Finally it is advantageous that on the sides of the lowered floor well pockets be formed into which the tiltable side parts fit in the transport and in the passive position of the ramp respectively and do not diminish the clearance of the floor well.

The advantages of this present ramp consist in that the manipulation with the ramp is easy and comfortable in all working positions, it is compact and its mass is balanced. The ramp is easy to produce, consists of a minimum of movable parts, has a long service life and is highly reliable.

### Brief description of the drawings

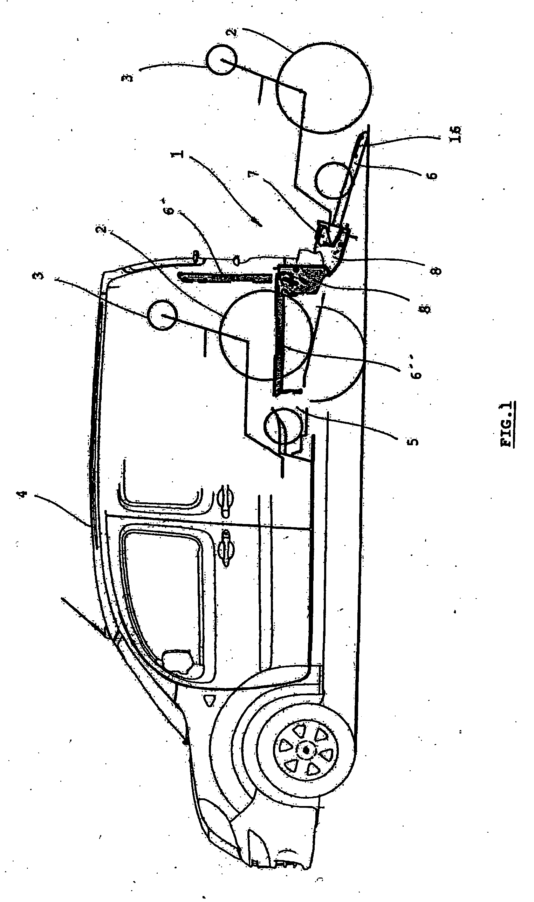

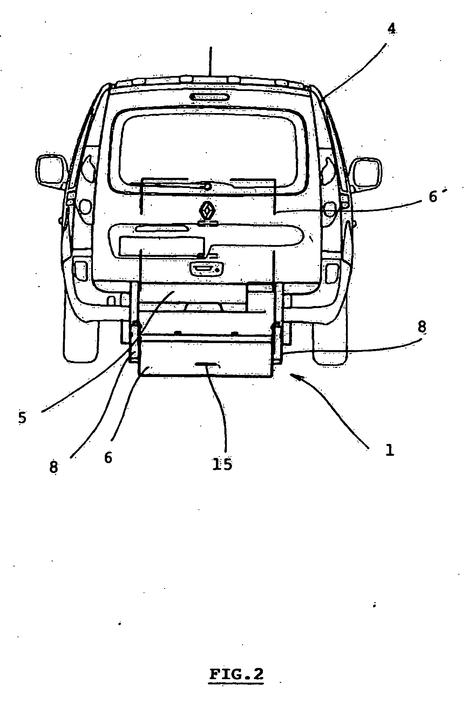

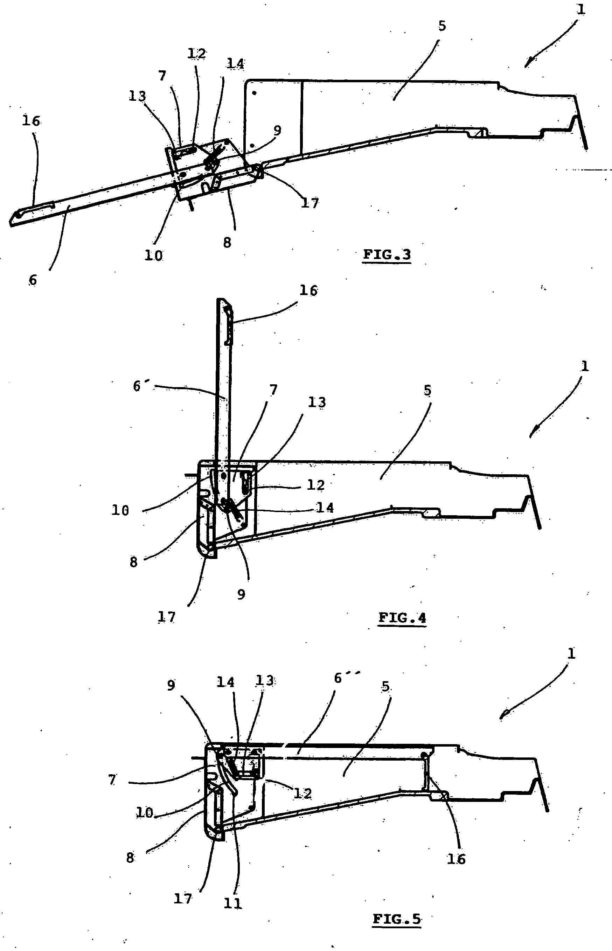

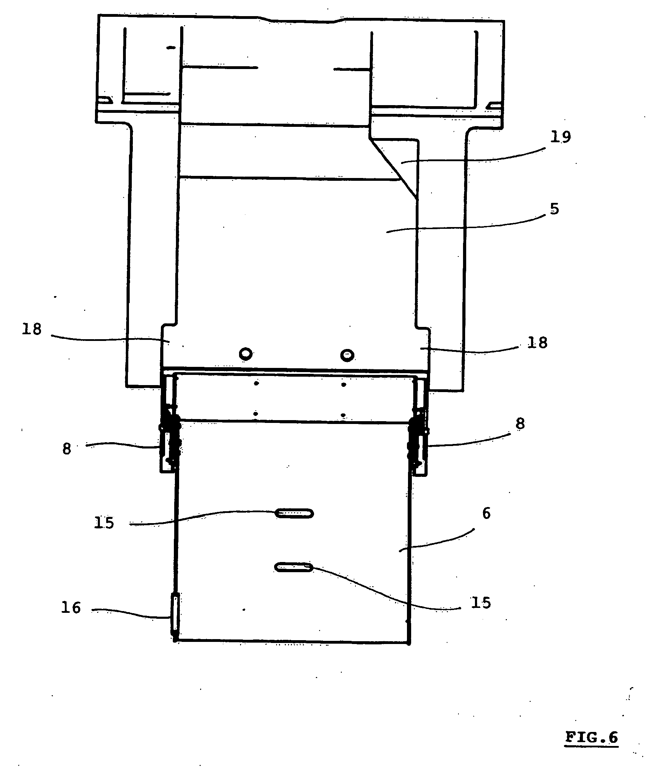

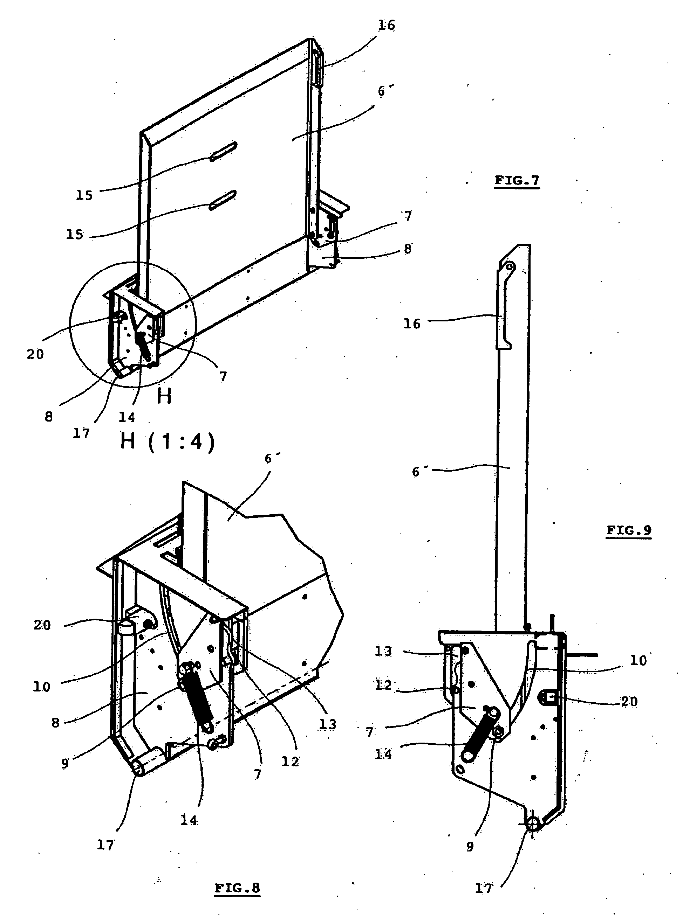

The invention shall be explained in detail by means of the drawings. Figure 1 is a lateral view of the vehicle with the ramp unfolded out from the rear door, showing the entry, transport and passive position of the ramp. Fig. 2 is a rear view of the vehicle according to Fig. 1. Fig. 3 is a lateral cross section of the foldable ramp in the entry position. Fig. 4 is a lateral cross section of the foldable ramp in the transport position, Fig. 5 is a lateral cross section of the foldable ramp in the passive position. Fig. 6 is a top view of the foldable ramp with the lowered floor well in the entry position. Fig. 7 is a perspective lateral view of the foldable ramp in the transport position. Fig. 8 is the "H" detail of the tiltable side part from Fig. 7 and Fig. 9 is a lateral view of the foldable ramp in transport position.

### Detailed description of the preferred embodiments

It is understood that specific examples of realization of the invention, as described and depicted below, are provided only as an illustration and that they in no way limit realization of the invention to such examples. Experts proficient in the state of the art will find and will be able to identify through routine experimenting one or more equivalents of the realizations of the invention as specifically described herein. Such equivalents shall be covered by the scope of patent claims contained herein.

The foldable ramp 1 is designed especially for personal use vehicles. It can be advantageously mounted in the rear part of a vehicle 4 with an access from the rear door. The floor of the vehicle 4 is adjusted such that a lowered floor well 5 is formed, in which the passenger 3 sitting in a wheelchair 2 or an electric scooter etc. is placed. The floor well 5 is made as a metal sheet weldment or as a plastic cast with the corresponding reinforcements. On both sides there are pockets 18 into which the tiltable side parts 8 of the ramp 1 fit.

The principal part of the foldable ramp 1 is the entry ramp 6, 6', 6", showed in Fig. 1- Fig. 5 in three different positions, i.e. the ramp 6 in the entry position, the ramp 6' in the transport position (vertically between the wheelchair and the door) and the ramp 6" in the passive position (horizontal), and the ramp 6" in the passive position (horizontal), when it covers the floor well 5 and is on the level of the floor of the vehicle 4, allowing the common use of the vehicle. The ramp 6, 6', 6" is made of a strong sheet metal and a fixture 15 or more fixtures 15 are made in it for an easier manipulation. The fixture 15 is made as an aperture in the ramp 6, 6', 6".

On sides of the ramp 6, 6', 6" metal sheet carriers 7 are attached, fitted on the tiltable side parts 8. The movable connection of the carriers 7 to the tiltable side parts 8 allows for the rotationally translational movement of the ramp 6, 6', 6" between the transport and passive position by means of the shaped guiding groove 10 of the tiltable side part 8 extended to a vertical recess 11 into which the guide pin 9 of the carrier 7 fits and by means of the shaped guiding part 13 of the carrier 7 into which the guide pin 12 of the tiltable side part 8 fits. If the tiltable side part 8 is in vertical position where it is secured by a latch 20, the ramp 6' is simply arrested in the transport position as follows: when the set up of the ramp 6 is lifted with the tiltable side parts 8 up, the guide pins 9 descend to the end of the shaped guiding grooves 10 and fit in the recess 11. Also the shaped guiding groove 13 of the carrier 7 is vertical in this position. Thus the ramp 6' is arrested in the vertical transport position where, moreover, it is secured by the spring 14 attached by one end to the carrier 7 and by the second one to the tiltable side part 8.

When the ramp 6' is tilted to the passive position of the ramp 6", the ramp 6' is lifted and tilted so that the carriers 7 turn simultaneously in the grooves 10, 13 by 90° and the ramp 6 gets to horizontal position above the edge of the floor well 5 and covers it. During this rotationally translational movement the spring 14 balances the weight of the ramp 6" and facilitates the laying of the ramp 6" inside the vehicle 4. A backstop 19 can be placed in the floor well 5 to ensure a better securing against which the ramp 6" abuts or the ramp 6, 6', 6" can be provided with a foldable support 16 which unfolds when the ramp 6" is put in the horizontal position and abuts against the lowered bottom of the floor well 5.

When the ramp 6 unfolds into the entry position (out of the vehicle 4), the ramp 6" will lift from the passive position and will be automatically arrested with the tiltable side parts 8 by fitting into the recess 11, the latches 20 of the tiltable side parts 8 will unlock and the whole set up of the tiltable side parts 8 with the ramp 6' will unfold as a whole out of the vehicle 4 so that the ramp 6 will get in the entry position. The tiltable side parts 8 pivot on hinges 17 welded to the lower edge of the lowered floor well 5.

The foldable ramp according to the technical solution is applicable for facilitating the entry and transport of invalid wheelchairs, electric scooters etc. in personal use vehicles, especially in taxi service vehicles and vehicles of other commercial transport operators.

## Claims

1. Foldable ramp allowing the entry of a passenger bound to a wheelchair into a vehicle designed for vehicles (4) with a lowered floor well (5) for transportation of a wheelchair (2) consisting of a ramp (6, 6', 6") which unfolds in the entry position out off the vehicle, in the transport position it is locked vertically in the vehicle (4) on the edge of the floor well (5) and in the passive position it extends horizontally over the floorwell (5) **characterized in that** the ramp (6, 6', 6") is provided by carriers (7) on its sides, the carriers (7) being movably connected to tiltable side parts (8) being pivotally attached to the lower edge of the floor well (5) and the movable connection of the carriers (7) to the tiltable side parts (8) is created with the possibility of change of position of the ramp (6, 6', 6") in respect of the tiltable side parts (8) when changing from the transport position of the ramp (6') into the passive position of the ramp (6") applying a rotationally translational movement such that in the passive position the tiltable side parts (8) are extended vertically and the ramp (6") lies horizontally on the level of the upper edges of the floor well (5) as well as on the level of the tiltable side parts (8).

2. Foldable ramp according to claim 1 **characterized in that** each carrier (7) is provided with at least one guide pin (9) fitting into a shaped guiding groove (10) formed in the tiltable side parts (8) corresponding to the respective carrier (7).

3. Foldable ramp according to claim 2 **characterized in that** the shaped guiding groove (10) is terminated on its lower end by a recess (11), the direction of which goes vertically downwards when the tiltable side part (8) is in vertical position.

4. Foldable ramp according to claim 2 or 3 **characterized in that** each tiltable side part (8) is provided with at least one guide pin (12) fitting into a shaped guiding groove (13) formed in the carrier (7) corresponding to the tiltable side part (8) and the shaped guiding groove (13) extends parallel to the recess (11) of the shaped guiding groove (10) of the tiltable side part (8) when the ramp (6') is in the transport position.

5. Foldable ramp according to at least one of the claims 1 to 4 **characterized in that** a spring (14) is attached by one of its ends to at least one tiltable side part (8) and the other end of the spring (14) is attached to the ramp (6, 6', 6") or to the carrier (7).

6. Foldable ramp according to at least one of the claims 1 to 5 **characterized in that** a foldable support (16) is pivotally attached at the edge of the ramp (6, 6', 6").

7. Foldable ramp according to at least one of the claims 1 to 6 **characterized in that** the ramp (6, 6', 6") consists of at least two pivotally interconnected parts.

8. Foldable ramp according to at least one of the claims 1 to 7 **characterized in that** the ramp (6, 6', 6") is provided with a fixture (15) formed by an aperture.

9. Foldable ramp according to at least one of the claims 1 to 8 **characterized in that** on the sides of the lowered floor well (5) pockets are formed (18) into which the tiltable side parts (8) fit in the transport and in the passive position of the ramp (6', 6") respectively.

## Patentansprüche

1. Eine faltbare Rampe (1) für den Aufstieg eines Invaliden Rollstuhlfahrers (2) in ein Fahrzeug (4), bestimmt für Fahrzeuge (4) mit der herabgesetzten Fußbodenwanne (5) für den Transport eines Rollstuhls (2), bestehend aus einer Auffahrtplatte (6, 6', 6"), die in der Auffahrtposition vom Fahrzeug (4) nach außen faltbar ist, wird in der Transportposition vertikal innerhalb des Fahrzeugs (4) am Rande der Fußbodenplatte (5) arretiert, und in der passiven Position ist sie über der Fußbodenwanne (5) horizontal angebracht, die sich dadurch auszeichnet, dass die Auffahrtplatte (6, 6', 6") an den Seiten mit den Mitnehmern (7) versehen ist, die mit den faltbaren Seitenteilen (8) beweglich verbunden sind, die an den unteren Rand der Fußbodenwanne (5) drehbar befestigt sind, wobei die bewegliche Verbindung der Mitnehmer (7) mit den faltbaren Seitenteilen (8) mit der Möglichkeit der Änderung der Position der Auffahrtplatte (6, 6', 6") gegenüber den faltbaren Seitenteilen (8) bei der Verstellung von der Transportposition der Platte (6') in die passive Position der Platte (6") durch eine Rotationsübertragungsbewegung so gebildet ist, dass die faltbaren Seitenteile (8) in der passiven Position vertikal angeordnet sind und dass die Auffahrtplatte (6") auf dem Niveau der oberen Ränder der Fußbodenwanne (5) und auch der faltbaren Seitenteile (8) horizontal liegt.

2. Die faltbare Rampe nach dem Anspruch 1, die sich dadurch auszeichnet, dass jeder Mitnehmer (7) mindestens mit einem Führungsbolzen (9) versehen ist, der sich in die Führungsformrille (10) fügt, die in dem faltbaren zum Mitnehmer (7) angehörigen Seitenteil (8) gebildet ist.

3. Die faltbare Rampe nach dem Anspruch 2, die sich dadurch auszeichnet, dass die Führungsformrille (10) an seinem unteren Ende mit einer Aussparung (11) abgeschlossen ist, die im Grundsatz vertikal nach unten bei der vertikalen Lage des faltbaren Seitenteils (8) gerichtet wird.

4. Die faltbare Rampe nach dem Anspruch 2 oder 3, die sich dadurch auszeichnet, dass jeder faltbare Seitenteil (8) mindestens mit einem Führungsbolzen (12) versehen ist, der sich in die Führungsformrille (13) fügt, die in dem zum faltbaren Seitenteil (8) angehörigen Mitnehmer (7) gebildet ist, und dass die Führungsformrille (13) in der Transportlage der Auffahrtplatte (6') parallel mit der Aussparung (11) der Führungsformrille (10) des faltbaren Seitenteils (8) verläuft.

5. Die faltbare Rampe nach mindestens einem der Ansprüche 1 bis 4, die sich dadurch auszeichnet, dass mindestens zu einem faltbaren Seitenteil (8) die Feder (14) durch ein ihrer Enden befestigt ist, deren anderes Ende an die Auffahrtplatte (6, 6', 6") oder an den Mitnehmer (7) befestigt ist.

6. Die faltbare Rampe nach mindestens einem der Ansprüche 1 bis 5, die sich dadurch auszeichnet, dass am Rande der Auffahrtplatte (6, 6', 6") die faltbare Stütze (16) drehbar befestigt ist.

7. Die faltbare Rampe nach mindestens einem der Ansprüche 1 bis 6, die sich dadurch auszeichnet, dass die Auffahrtplatte (6, 6', 6") aus mindestens zwei gegenseitig drehbar verbundenen Teilen besteht.

8. Die faltbare Rampe nach mindestens einem der Ansprüche 1 bis 7, die sich dadurch auszeichnet, dass die Auffahrtplatte (6, 6', 6") mit einem Griff (15) versehen ist, der durch eine Öffnung gebildet ist.

9. Die faltbare Rampe nach mindestens einem der Ansprüche 1 bis 8, die sich dadurch auszeichnet, dass an den Seiten der gesenkten Fußbodenplatte (5) die Taschen (18) gebildet sind, in die sich die kippbaren Seitenteile (8) in der Transport- und passiven Lage der Auffahrtplatte (6, 6', 6") fügen.

## Revendications

1. Une rampe pliable (1) permettant à un passager (3) inalide en chaise roulante (2) d'entrer dans un véhicule (4), destinée pour les véhicules (4) avec le bac de plancher abaissé (5) pour le transport d'une chaise roulante (2), composée du plateau d'accès (6, 6', 6") qui se plie à l'extérieur du véhicule en position d'accès (4), en position de transport, il est bloqué verticalement l'intérieur du véhicule (4) au bord du bac de plancher (5), dans la position passive, il se trouve horizontalement au-dessus du bac de plancher (5) **caractérisée en ce que** le plateau d'accès (6, 6', 6") est équipé, sur les cotés, par les entraîneurs (7), liés de manière mobile avec les parties latérales pliable (8) qui sont fixées, de manière pivotante, au bord inférieur du bac de plancher (5), la connexion mobile des entraîneurs (7) avec les parties latérales pliable (8) est créée avec la possibilité de changer la position du plateau d'accès (6, 6', 6") à l'égard des parties latérales pliables (8) pendant le déplacement de la position de transport du plateau (6') en position passive du plateau (6") par le mouvement rotatif translatoire de manière que, dans la position passive, les parties latérales pliables (8) sont rangées verticalement et le plateau d'accès (6") se trouve horizontalement au niveau des bords supérieures du bas de plancher (5) et des parties latérales pliables (8).

2. La rampe pliable selon la revendication 1 **caractérisée en ce que** chaque l'entraîneur (7) est équipé avec au moins un goujon de guidage (9) qui s'engage dans la rainure profilée de guidage (10) créée dans la partie latérale pliable (8) correspondant à l'entraîneur (7).

3. La rampe pliable selon la revendication 2 **caractérisée en ce que** la rainure profilée de guidage (10) est terminée, sur son bord inférieur, par le dégagement (11) orienté verticalement en bas en cas de la position verticale de la partie latérale pliable (8).

4. La rampe pliable selon la revendication 2 ou 3, **caractérisée en ce que** chaque partie latérale pliable (8) est équipée avec un goujon de guidage (12) au moins qui s'engage dans la rainure profilée de guidage (13), créée dans l'entraîneur (7) correspondant à la partie latérale pliable (8) et la rainure profilée de guidage (13), dans la position de transport du plateau d'accès (6') passe parallèlement avec le dégagement (11) de la rainure profilée de guidage (10) de la partie latérale pliable (8).

5. La rampe pliable selon une des revendications 1 à 4, **caractérisée en ce que** le ressort (14) est fixé, par une extrémité, à au moins une partie latérale pliable (8), la deuxième extrémité est fixée au plateau d'accès (6, 6', 6") ou à l'entraîneur (7).

6. La rampe pliable selon une des revendications 1 à 5, **caractérisée en ce que** l'appui pliable (16) est fixé au bord du plateau d'accès (6, 6', 6") de manière pivotante.

7. La rampe pliable selon une des revendications 1 à 6, **caractérisée en ce que** le plateau d'accès (6, 6', 6") est formé par deux parties au minimum, liées ensemble de manière pivotante.

8. La rampe pliable selon une des revendications 1 à 7, **caractérisée en ce que** le plateau d'accès (6, 6', 6") est équipé avec l'attache (15) formé par un trou.

9. La rampe pliable selon une des revendications 1 à 8, **caractérisée en ce que** les logements (18) sont créés sur les cotés du bac de plancher abaissé (5), dans lesquels s'engagent les parties latérales pliables (8) en position de transport et en position passive du plateau d'accès (6', 6").
